# EUROPEAN PATENT SPECIFICATION

(11) **EP 0 541 392 B1**
(45) Date of publication and mention of the grant of the patent: **28.02.1996**
(21) Application number: 92310192.7
(22) Date of filing: 06.11.1992
(51) Int. Cl.: B21C 51/00, B65G 43/08

(54) **Metal detection**
Metallnachweis
Détection de métal

(30) Priority: 07.11.1991 GB 9123664
(43) Date of publication of application: 12.05.1993
(73) Proprietor: British Steel plc, London SE1 7SN (GB)
(72) Inventor: Hobson, Ian, Rotherham, South Yorkshire S65 3ST. (GB)
(74) Representative: Heath, Peter William Murray

(56) References cited:
- US-A- 2 547 407
- US-A- 2 554 575
- US-A- 3 872 964
- US-A- 4 567 410

## Description

This invention relates to the detection of moving metal objects, and especially to the tracking of hot metal slabs in processing lines.

One particular form of processing line for hot metal is that for the production of hot rolled narrow strip. In such lines the metal in the form of a slab is heated, rolled hot to controlled dimensions and coiled. Such lines work with a variety of steel grades, and even non-ferrous metals, and are computer controlled so that the dimensions of the processed strip can vary from strip to strip as they pass down the line. Thus these processing lines can produce a variety of different qualities and sizes of output in a continuous mix of jobs flowing down the line. The metal feed stock in the form of slabs must be offered to the line in the correct sequence of material grades, and is heated in a reheat furnace for about an hour before being processed on the line. In many installations it is common to have more than one furnace so that the line handles the output from two or more furnaces. Such furnaces are often of the pusher type in which slabs are loaded in at a cold end and are pushed through the furnace as more slabs are loaded. At the output end having passed through the furnace by being pushed by the following slabs they drop onto the processing line to be processed.

The sequence in which the slabs are fed into the reheating furnaces at the cold side is recorded in a process computer, and the computer will record the slabs in the furnaces and request as required the particular furnace from which the next slab should be pushed. Unfortunately, there is currently a possibility of human error in that the pushing operation is manually controlled, and the plant computer cannot check that the right slab has been presented for processing; the serious adverse consequence of errors will be obvious.

In view of this, considerable effort has been expended in tracking the hot metal slabs as they leave the heat furnaces and drop onto the processing line. Methods that have been tried include video tracking using television cameras and infra red tracking. Both these can work reasonably well, but complications arise in practice because of the flare from the hot furnace and particularly from scale on the removed slabs dropped on or near the processing line.

Reference is hereby made to US-A-2547407.

This specification discloses apparatus for detecting the presence of metal objects in non-metallic materials. Generally, the apparatus is disposed adjacent metal objects passing on a belt, and includes two inductively related coils and a third or balance coil, the three coils being arranged to produce a null balance of the inductive effect between the two inductively related coils.

It is an object of the present invention to overcome or at least substantially reduce the above mentioned problems and difficulties.

According to a first aspect of the present invention there is provided apparatus for detecting the presence of metal items passing a predetermined point in a processing line for those items, including at least a part of an inductive electric circuit disposed adjacent the predetermined point in the processing line, and means for detecting changes of inductance of the electric circuit due to the metal items passing the predetermined point, and wherein the inductive electric circuit comprises a tuned circuit and means are included for measuring the change in the resonant frequency of the tuned circuit including the coil, characterised in that the inductive electric circuit includes means for automatic resonance re-tuning to compensate for drift in the resonant frequency thereof.

According to a second aspect of the present invention there is provided a method of detecting the presence of metal items passing a predetermined point in a processing line for those items comprising disposing at least part of an inductive electric circuit adjacent the predetermined point in the processing line and detecting changes of inductance of the electric circuit due to the metal items passing the predetermined point, wherein the inductive electric circuit comprises a tuned circuit and including measuring the change in the resonant frequency of the tuned circuit including the coil, characterised by automatically re-tuning the circuit to compensate for drift in the resonant frequency thereof.

The electric inductive circuit may include a coil or loop located close to the predetermined point in the processing line.

The arrangement preferably is such that the period for re-tuning the detectors may be less than 10 seconds.

There may be provided a plurality of inductive electric circuits adjacent the predetermined point, and a detector connected to receive output signals from the plurality of circuits and arranged to transmit an ongoing positive signal indicative of the passage of a metal item past a predetermined point on the basis of the receipt of a predetermined number of inductance change signals from the plurality of circuits.

The processing line may comprise a hot rolling mill and the metal items may comprise hot metal slabs, in which case at least part of at least one inductive electric circuit may be situated adjacent the exit zone from at least one reheat furnace of the rolling mill prior to a conveyor to a rolling line. Thus the one or more coil or loops may be provided adjacent to the drop out zone from the or each reheat furnace.

The invention will now be described with reference to the accompanying drawings in which:-
Figure 1 (a) shows in elevation a schematic form of the furnace end of a hot narrow strip rolling mill;
Figure 1 (b) is a schematic plan of the arrangement of Figure 1 (a); and
Figure 2 is a diagram of the control circuitry for the output of one furnace.

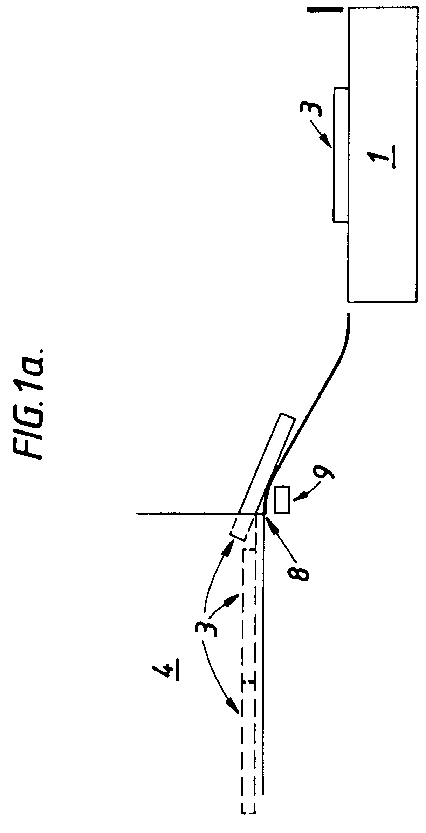

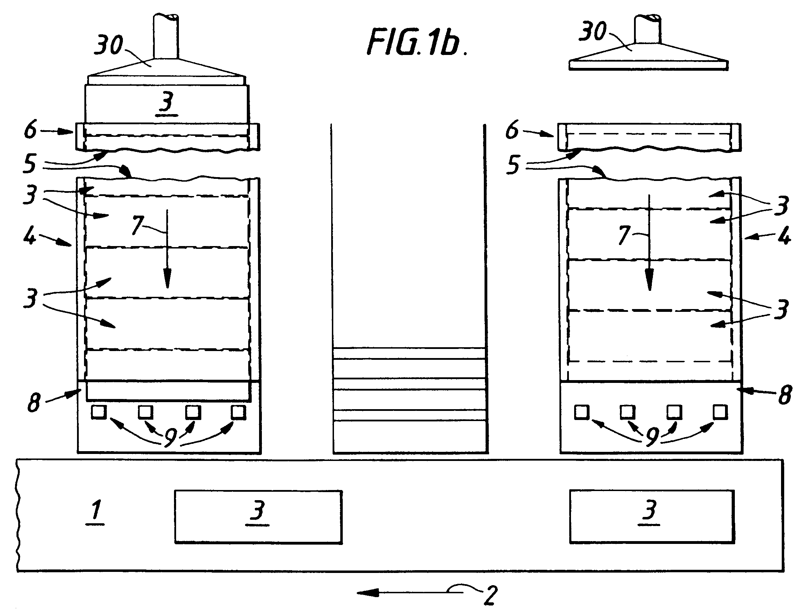

Turning now to Figure 1 the rolling mill has a processing line 1 and slabs progress in the direction 2 so as to be rolled into strip. The metal slabs 3 are heated in reheat furnaces 4 fired by gas or some other fuel of known kind. Two such furnaces are provided and for convenience the full length of the furnaces has not been shown as indicated by the breaks 5.

The process of feeding the metal slabs to the processing line is that at the cold end of the furnace 6 a cold slab is pushed by a pusher 30 in the direction arrow 7 in the order in which it will be required to be dropped out of the furnace onto the processing line. The process of pushing the cold slab into the furnace transmits the push through the slabs being heated in the furnace until the one at the exit 8 to the furnace drops over the slope and falls onto the processing line.

As has been explained there are two furnaces, and the length of time it takes a slab to pass through the furnace from cold input to dropping out onto the processing line can be an hour or more. The sequence in which the slabs are fed into the furnace is recorded on a process computer 32 which tracks the progress of the slabs through the furnace and as a new slab is required from the appropriate furnace so as to eject the hot slab required onto the processing line.

In order to be able to track this process, so that the computer can confirm which furnace has been pushed, at the exit to each furnace on the drop out slope are installed a number of coils; in this case four for each furnace shown at 9. These coils, as will be seen, are permanently situated in the concrete base of the furnace and are thus well protected from heat or other causes of damage.

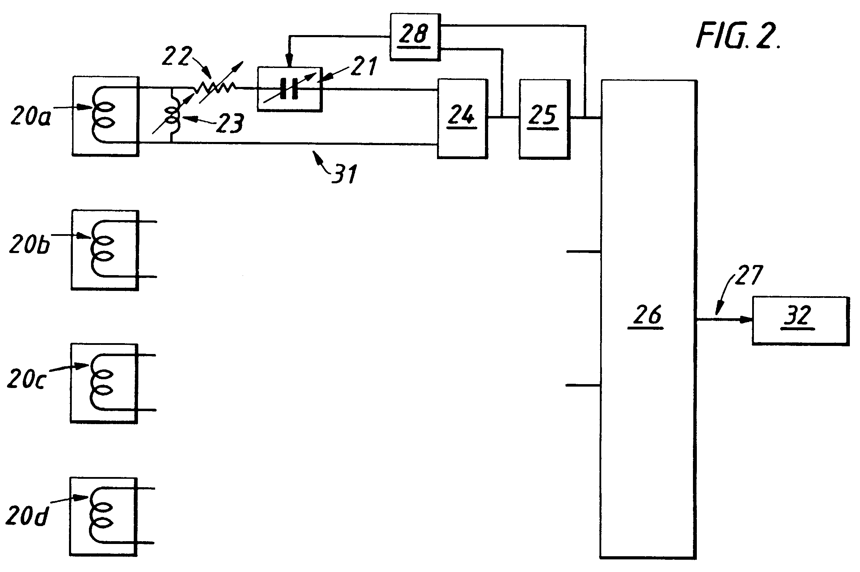

Turning now to Figure 2 the coils of one furnace are shown at 20a, 20b, 20c and 20d and as will be seen, four coils are shown. The coils 20a, 20b, 20c are initially functional, and coil 20d is a spare. This is so that in the event that any one coil of coils 20a, 20b or 20c becomes unusable provision has already been made when building the furnace by installing the spare coil 20d so that the defective coil can be taken out of service and the spare one 20d functionally connected in its place, thus obviating the need for repair work on the furnace. In practical terms the coils may for example each be of 6 turns of copper wire of 2.5mm² thick and insulated up to 250°C working temperature. They may be rectangular in plan of the order of 300mm by 450mm. Electrically the coil may have a resistance of 1.2 ohms, and an inductance of 48 microhenries.

Elements of the operating circuitry 31 are shown for coil 20a only; the elements for coils 20b and 20c are identical. The coil 20a is included in a tuned circuit with a variable capacitance 21 and manually adjustable ballast resistance 22 and ballast inductance 23. The inductance and resistance are included to enable manual adjustment of the operating characteristics of the circuit to be made.

In operation the resonant frequency of the tuned frequency circuit may be measured by one of a number of techniques already known per se. With the arrangement illustrated it is measured by means of a detector 24, the method comprising injecting into the tuned circuit a sweep frequency and measuring the response of the circuit. The frequency at which the circuit oscillates is fed to a comparator 25 which compares the measured resonant frequency of the circuit with a preset frequency of, say, 400Hz. If the measured frequency deviates from 400 Hz by more than a preset amount then a positive output is provided from the comparator 25. This output is fed into detector 26 (along with similar outputs from the corresponding circuitry of coils 20b and 20c), which provides an output 27 to the process computer 30 when two out of three of the comparators are providing a positive signal. In this way it will be seen that when a metal slab passes over the coils 20 the frequency of the resonant circuit varies, the change is detected and is used to generate an output signal which passes through a "majority voting" system to provide an output to the process computer 32.

The comparator 25 also feeds a timer 28. In operation it has been found that because of changes in the external circumstances the resonant frequency of the circuits can change and drift. The reasons why drift may occur are well known, and include thermal changes, which would be expected. In addition, it is possible for scale and other debris to build up on the furnace floor and this will effect the resonant frequency. For this reason a feedback circuit from the frequency detector 24 and comparator 25 is provided through the timer 28 to the variable capacitor 21. This is arranged so that should the output from the comparator 25 of a particular measuring circuit be positive for more than five seconds, the timer begins to vary the variable capacitor while observing the change of frequency produced in the output from the frequency detector. By then adjusting the value of the capacitance so that the frequency is re-tuned to 400Hz the circuit is restored to its central operating condition, and the affects of scale build up and drift of calibration for example are eliminated.

Although the invention has been described with particular reference to the detection of slabs dropping out of the reheat furnace and their use when the furnace is hot, they can also be used when the furnace is cold, as it will be when it is to be subject to maintenance work. Clearly, the nature of the furnaces requires them to be full of slabs when in operation and therefore must be emptied when cold in order for maintenance to be carried out. The invention enables the tracking of slabs moved cold from the furnace also to be carried out.

Another distinct advantage of the inductance detection of the hot metal is that it does not rely on the magnetic properties of the metal. This is an advantage, because hot strip lines are sometimes used for rolling non-ferrous metals; for example copper may be rolled. The system described will work with copper slabs as well, although it may be necessary to ensure that the inductive change by a copper slab is within the limits set for the control circuitry to activate.

## Claims

1. Apparatus for detecting the presence of metal items (3) passing a predetermined point (8) in a processing line (1) for those items, including at least a part of an inductive electric circuit (31) disposed adjacent the predetermined point (8) in the processing line (1), and means (24, 25) for detecting changes of inductance of the electric circuit (31) due to the metal items (3) passing the predetermined point (8), and wherein the inductive electric circuit (31) comprises a tuned circuit and means (24, 25) are included for measuring the change in the resonant frequency of the tuned circuit including the coil, characterised in that the inductive electric circuit (31) includes means (21, 24, 25, 28) for automatic resonance re-tuning to compensate for drift in the resonant frequency thereof.

2. Apparatus as claimed in Claim 1 characterised in that the electric inductive circuit (31) includes a coil (9, 20a, 20b, 20c) located close to the predetermined point (8) in the processing line (1).

3. Apparatus as claimed in any one of the preceding claims characterised in that there is provided a plurality of inductive electric circuits (31), adjacent the predetermined point (8), and a detector (26) connected to receive output signals from the plurality of circuits and arranged to transmit an ongoing positive signal indicative of the passage of a metal item past the predetermined point (8) on the basis of the receipt of a predetermined number of inductance change signals from the plurality of circuits (31).

4. Apparatus as claimed in any one of the preceding Claims wherein the processing line comprises a hot rolling mill and the metal items are hot metal slabs (3) characterised by at least part of at least one inductive electric circuit (31) situated adjacent the exit zone from at least one reheat furnace (4) prior to a conveyor (1) to a rolling line.

5. A method of detecting the presence of metal items passing a predetermined point in a processing line for those items comprising disposing at least part of an inductive electric circuit adjacent the predetermined point in the processing line and detecting changes of inductance of the electric circuit due to the metal items passing the predetermined point, wherein the inductive electric circuit comprises a tuned circuit and including measuring the change in the resonant frequency of the tuned circuit including the coil, characterised by automatically re-tuning the circuit to compensate for drift in the resonant frequency thereof.

6. A method as claimed in Claim 5 wherein there is provided a plurality of inductive electric circuits adjacent the predetermined point, characterised by detecting output signals from the plurality of circuits and transmitting an ongoing positive signal indicative of the passage of a metal item past the predetermined point on the basis of the receipt of a predetermined number of inductance change signals from the plurality of circuits.

## Patentansprüche

1. Vorrichtung zum Erkennen des Vorhandenseins (der Gegenwart) von Metallobjekten (3), die einen vorgegebenen Punkt (8) in einer Verarbeitungslinie (1) solcher Objekte (3) passieren, wobei die Vorrichtung mindestens einen Teil eines induktiven elektrischen Schaltkreises (31) umfaßt, der dem vorgegebenen Punkt (8) in der Verarbeitungslinie (1) benachbart angeordnet ist, und die Mittel (24, 25) zum Erkennen von Änderungen der Induktivität des elektrischen Schaltkreises (31) infolge der Metallobjekte (3), die den vorgegebenen Punkt (8) passieren, umfaßt und wobei der elektrische Schaltkreis (31) einen abgetimmten Schaltkreis enthält und die Mittel (24, 25) zur Messung der Änderung der Resonanzfrequenz des abgetimmten Schaltkreises, die die Wicklung umfaßt, eingeschlossen sind, dadurch gekennzeichnet, daß der induktive elektrische Schaltkreis (31) Mittel (21, 24, 25, 28) zu einer automatischen Resonanz-Wiederabstimmung zur Kompensation der Verschiebung seiner Resonanzfrequenz enthält.

2. Vorrichtung nach Anspruch 1, dadurch gekennzeichnet, daß der elektrische induktive Schaltkreis (31) eine Wicklung (9, 20a, 20b, 20c) umfaßt, die nahe dem vorgegebenen Punkt (8) in der Verarbeitungslinie (1) angeordnet ist.

3. Vorrichtung nach einem der vorstehenden Ansprüche, dadurch gekennzeichnet, daß dort eine Vielzahl von induktiven elektrischen Schaltkreisen (31) benachbart zu dem vorgegebenen Punkt (8) vorgesehen sind und ein Detektor (26) zum Empfang von Ausgangssignalen von der Vielzahl der Schaltkreise an diese angeschlossen ist und ausgebildet ist, um ein andauerndes positives Signal auszusenden, das aufgrund des Empfangs einer vorgegebenen Anzahl von Induktivitätsänderunges-Signalen von der Vielzahl der Schaltkreise (31) den Durchlauf von einem Metallobjekt an dem vorgegebenen Punkt (8) anzeigt.

4. Vorrichtung nach eindem der vorstehenden Ansprüche, wobei die Verarbeitungslinie eine Warmwalze umfaßt und die Metallobjekte heiße Metalltafeln sind, dadurch gekennzeichnet, daß mindestens ein Teil von mindestens einem induktiven elekrischen Schaltkreis (31) zur Ausgangszone mindestens eines Wiederaufheizofens (4) vor einem Förderer (1) zu einer Walzlinie angeordnet ist.

5. Verfahren zum Erkennen von Metallobjekten, die einen vorgegebenen Punkt in einer Verarbeitungslinie für solche Objekte passieren, wobei mindestens ein Teil eines induktiven elektrischen Schaltkreises benachbart zum vorgegebenen Punkt in der Verarbeitungslinie angeordnet wird, und Änderungen der Induktivität des elektrischen Schaltkreises infolge des Passierens der Metallobjekte am vorgegebenen Punkt erkannt werden, wobei der induktive elektrische Schaltkreis einen abgestimmten Schaltkreis enthält und ein Messen der Änderung der Resonanzfrequenz des abgestimmten Schaltkreises einschließlich der Wicklung umfaßt, dadurch gekennzeichnet, daß automatisch eine Wiederabstimmung des Schaltkreises erfolgt, um die Verschiebung der Resonanzfrequenz darin zu kompensieren.

6. Verfahren nach Anspruch 5, wobei eine Vielzahl induktiver elektrischer Schaltkreise benachbart zu dem vorgegebenen Punkt vorgesehen ist, dadurch gekennzeichnet, daß Ausgangssignale von der Vielzahl von Schaltkreisen erkannt werden und ein andauerndes positives Signal übertragen wird, das aufgrund des Empfangs von einer vorgegebenen Anzahl von Induktivitätsänderungssignalen von der Vielzahl der Schaltkreise anzeigt, daß ein Metallobjekt den vorgegebenen Punkt passiert.

## Revendications

1. Appareil pour détecter la présence de pièces métalliques (3) passant en un point prédéterminé (8) dans une ligne (1) de traitement de ces pièces, comportant au moins une partie d'un circuit électrique inductif (31) disposé à proximité immédiate du point prédéterminé (8) dans la ligne de traitement (1), et des moyens (24,25) pour détecter des variations de l'inductance du circuit électrique (31) par suite du passage de pièces métalliques (3) à l'endroit du point prédéterminé (8), et dans lequel le circuit électrique inductif (31) comprend un circuit accordé et les moyens (24,25) sont inclus pour mesurer la variation de la fréquence de résonance du circuit accordé comportant la bobine, caractérisé en ce que le circuit électrique inductif (31) comporte des moyens (21,24,25,28) pour réajuster automatiquement la fréquence de résonance afin de compenser une dérive de la fréquence de résonance du circuit.

2. Appareil suivant la revendication 1 caractérisé en ce que le circuit électrique inductif (31) comporte une bobine (9,20a,20b,20c) située à proximité du point prédéterminé (8) dans la ligne de traitement (1).

3. Appareil suivant l'une quelconque des revendications précédentes caractérisé en ce qu'il comprend une pluralité de circuits électriques inductifs (31) situés à proximité immédiate du point prédéterminé (8) et un détecteur (26) connecté de manière à recevoir des signaux de sortie provenant de la pluralité de circuits est agencé de manière à émettre un signal positif continu indiquant le passage d'une pièce métallique à l'endroit du point prédéterminé (8) sur la base de la réception d'un nombre prédéterminé de signaux de variation d'inductance en provenance de la pluralité des circuits (31).

4. Appareil suivant l'une quelconque des revendications précédentes, dans lequel la ligne de traitement comprend un laminoir à chaud et les pièces métalliques sont des brames chaudes (3), caractérisé en ce qu'au moins une partie d'au moins un circuit électrique inductif (31) est située à proximité immédiate de la zone de sortie d'au moins un four de réchauffage (4), en avant d'un convoyeur (1) aboutissant à une ligne de laminage.

5. Procédé de détection de la présence de pièces métalliques passant en un point prédéterminé dans une ligne de traitement de ces pièces, comprenant les étapes consistant à disposer au moins une partie d'un circuit électrique inductif à proximité immédiate du point prédéterminé dans la ligne de traitement et à détecter des variations de l'inductance du circuit électrique par suite du passage des pièces metalliques au point prédéterminé, dans lequel le circuit électrique inductif comprend un circuit accordé, et comportant l'étape consistant à mesurer la variation de la fréquence de résonance du circuit accordé comportant la bobine, caractérisé par le réaccordement automatique du circuit afin de compenser la dérive de la fréquence de résonance de ce circuit.

6. Procédé suivant la revendication 5, dans lequel il est prévu une pluralité de circuits électriques inductifs situés à proximité immédiate du point prédéterminé, caractérisé en ce qu'on détecte des signaux de sortie provenant de la pluralité de circuits et on émet un signal positif continu indiquant le passage d'une pièce métallique à l'endroit du point prédéterminé sur la base de la réception d'un nombre prédéterminé de signaux de variation d'inductance en provenance de la pluralité de circuits.
